# DEMANDE DE BREVET EUROPEEN

(11) **EP 0 772 175 A1**
(43) Date de publication de la demande: **07.05.1997**
(21) Numéro de dépôt: 96202462.6
(22) Date de dépôt: 04.09.1996
(51) Int. Cl.: G09B 15/02

(54) **Matériel pour la présentation de la musique**

(30) Priorité: 31.10.1995 BE 9500900
(71) Demandeur: Pozzo di Borgo, Anne-Marie, 1245 Collonges-Bellerive (CH)
(72) Inventeur: Pozzo di Borgo, Anne-Marie, 1245 Collonges-Bellerive (CH)
(74) Mandataire: Konings, Lucien Marie Cornelis Joseph

(57) **Abrégé**

La présente invention concerne un matériel pour la présentation de la musique.

Au début d'un morceau de musique, le tempo peut être indiqué acec des mots: rapide, long, modéré et/ou vif. Dans la partition musicale, on peut indiquer par écrit: accélérer ou ralentir.

La présente invention a pour but de mettre en évidence de différentes fluctuations rythmiques et propose le matériel pour la présentation de la musique comprenant une partition d'au moins une portée avec des notes musicales, caractérisé en ce qu'au moins un fond indique une variation de tempo normal.

Grâce a cette invention l'interprète est en parfaite harmonie avec le créateur. L'interprète qui perçoit ces fluctuations rythmiques est plus sensible aux nuances des fluctuations que le créateur veut définir.

## Description

La présente invention concerne un matériel pour la présentation de la musique.

Au début d'un morceau de musique, le tempo peut être indiqué avec des mots: rapide, long, modéré et/ou vif. Dans la partition musicale, on peut indiquer par écrit: accélérer ou ralentir.

La présente invention a pour but de mettre en évidence de différentes fluctuations rythmiques et propose le matériel selon la revendication 1.

Grâce a cette invention l'interprète est en parfaite harmonie avec le créateur. L'interprète qui perçoit ces fluctuations rythmiques est plus sensible aux nuances des fluctuations que le créateur veut définir.

Le matériel pour la présentation de la musique peut être un porteur d'informations musicales: par exemple un tableau de bois, métal ou autres matières portant au moins une partition de musique.

Les tableaux sont de préférence des dessins sur papier, de préférence des pages d'un livre d'instructions et/ou d'un livre d'exercices. Les dessins peuvent également avoir la forme de dessins sur papier et les caractères peuvent avoir la forme d'une couche de peinture, d'encre ou d'un autre liquide ou d'auto-collant.

Le matériel porteur d'informations musicales peut être une bande vidéo, un disque optique, une disquette d'ordinateur permettant de reproduire les images des leçons: par exemple les partitions sur l'écran d'un système électronique.

Comme modes de réalisation illustratifs et non-limitatifs de l'objet de l'invention, plusieurs des présentations préférentielles sont décrites ci-après en se référant aux dessins annexés.
La figure 1 présente un fond indiquant le tempo accéléré suivi par un fond indiquant le tempo ralenti;
La figure 2 présente un fond indiquant le tempo ralenti;
Les figures 3 et 4 présentent des partitions comprenant un fond indiquant le tempo dégressif (ralenti);
La figure 5 présente une partition avec des liaisons différentes; et
Les figures 6 et 7 présentent des partitions avec des notes qui se distinguent individuellement des autres.

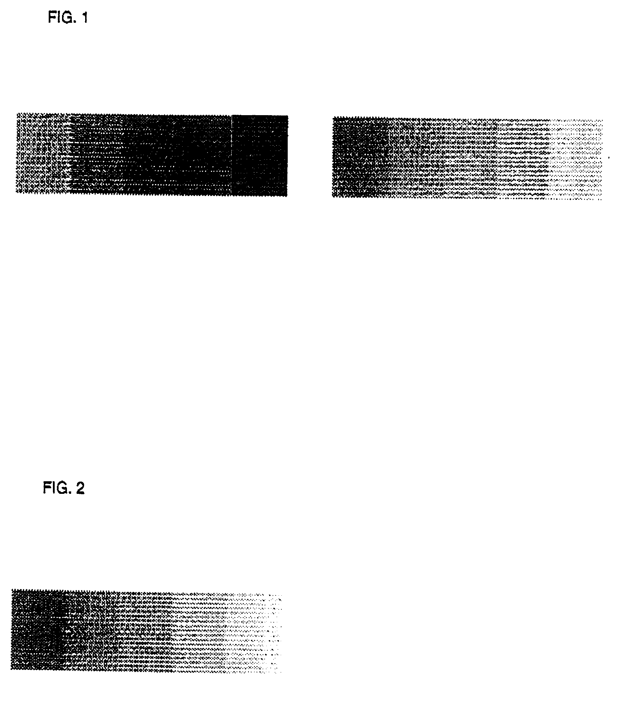

Dans les figures 1-4, à l'endroit ou le fond est le plus foncé, le tempo est le plus vite; au contraire à l'endroit ou le fond est le plus clair, le tempo est le plus long. Les fonds indiquant la variation du tempo sont formés par des petits points: par exemple 250 cm². A l'endroit ou le tempo est long, ces petits points sont moins nombreux et/ou leurs surfaces sont moins grandes qu'aux endroits ou le tempo est vite. Dans le dessin, les points sont indiqués moins nombreux pour les rendre plus visibles. De préférence on ne voit pas les points, mais seulement une surface plus ou moins foncée.

Les points de fond peuvent être remplacés par des lignes moins ou plus écartées et/ou plus ou moins épaisses à l'endroit vite et long respectivement. De cette manière la variation du tempo peut être indiquée en noir.

Le fond peut être coloré avec une et la même couleur, mais de plus en plus foncée en cas d'accélération du tempo et de plus en plus claire en cas de dégression du tempo.

Le fond peut être formé de 2 couleurs: par exemple vert et jaune de telle manière qu'en cas d'accélération et de dégression, le fond se change progressivement et dégressivement du jaune au vert et du vert au jaune respectivement.

Une autre possibilité est l'utilisation de la couleur bleue pour l'endroit vite et jaune pour l'endroit lent avec la couleur verte au milieu. Toutes autres couleurs et combinaisons de couleurs aussi en direction de changement de tempo contraire sont utilisables.

La succession des couleurs d'arc-en-ciel est utilisable pour exprimer la variation du tempo sur le fond ou sur les notes. La part de la musique avec tempo normal a un fond normal, par exemple blanc.

Le créateur utilise de préférence trois nuances d'accélération et trois nuances de ralentissement qui mettent en évidence les relations des différentes fluctuations du tempo:
accélération faible;
accélaration plus rapide;
accélération très rapide;
léger ralentissement;
moyen ralentissement; et
grand ralentissement.

Le créateur prescit par exemple une combinaison entre une accélération suivi d'un ralentissement ou le contraire;
ou il propose aussi une combinaison d'un mouvement d'accélération à l'intérieur d'un ralentissement général, ou le contraire.

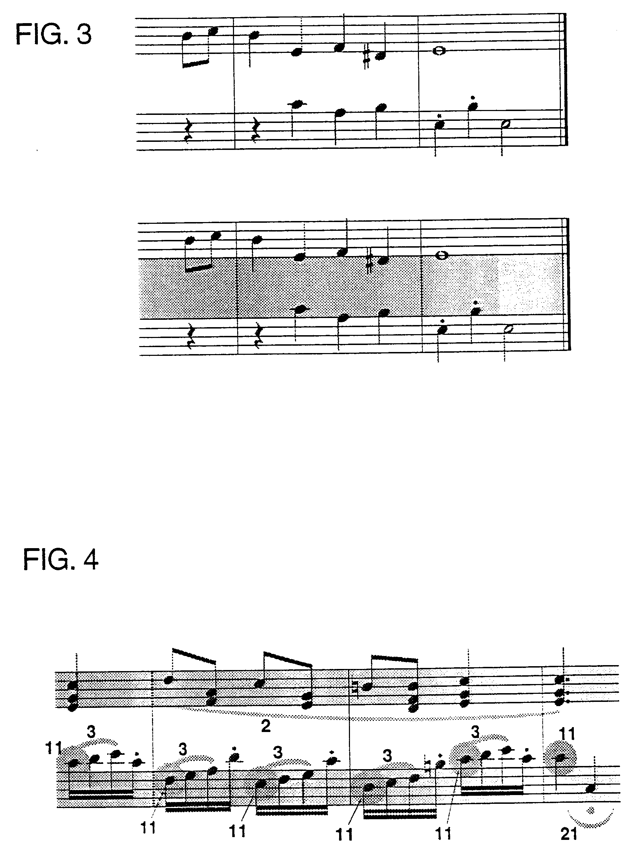

Les bandes indiquant la variation du tempo sont présentées entre les deux portées (fig. 3) et/ou dans les portées (fig. 4).

Une autre sorte de variation du tempo est la liaison .

Les liaisons sont présentées comme architecture de base de l'interprétation. Elles conduisent et caractérisent subtilement les phrasés, et permettent la mise en circulation des fluctuations du tempo. Les liaisons d'écriture normale sont indiquées par des arcs normaux, qui ne peuvent pas nuancer la fluctuation rythmique des phrasés. Les liaisons proposées comme support visuel dans l'écriture musicale de l'invention sont nuancées par des arcs unissant des groupes de notes, ces arcs étant écrits avec différences d'épaisseur.

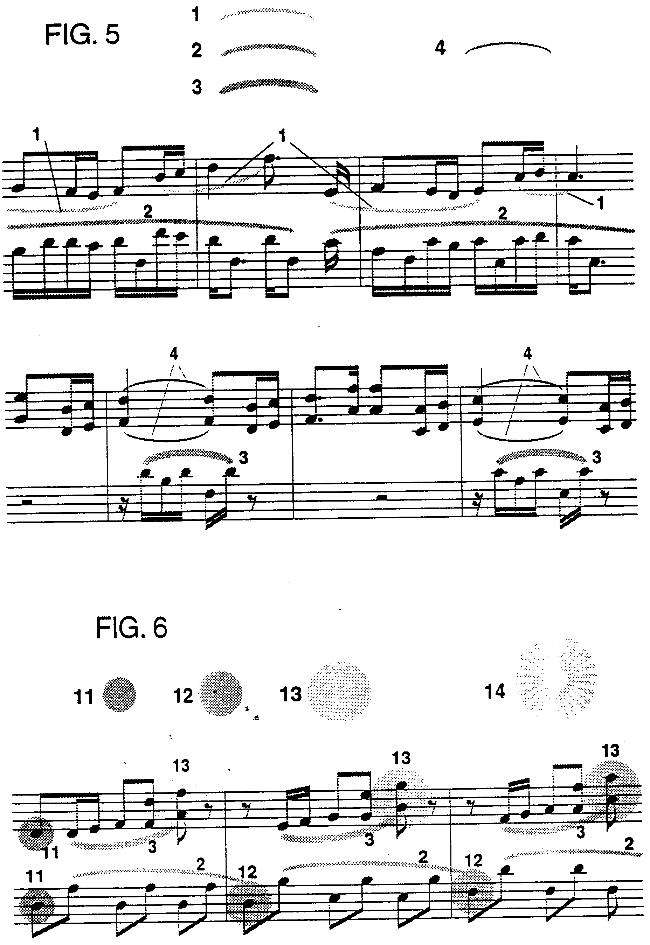

Le créateur utilise plusieurs, par exemple trois, nuances d'épaisseurs (Fig. 5):
1. Phrasé souple et linéaire (liaison en forme d'arc, fine, claire), ce qui donne une impression de largeur entre les sons.
2. Phrasé plus marqué (liaison en forme d'arc, épaisse, plus foncée), ce qui donne une impression de régularité rythmique entre les sons.
3. Phrasé très accentué (liaison en forme d'arc, très épaisse, assez foncée), ce qui donne une impression d'un débit plus serré entre les sons.
4. Remarque: La liaison de prolongement, en forme d'arc mince, n'appartient pas au phrasé. Elle prolonge la valeur de la note en additionnant la valeur à laquelle elle est reliée. Elle est caractérisée par sa finesse.

L'interprète de la liaison est plus en rapport avec la structure générale de l'interprétation prévue par le créateur. Ce rapport visuel extériorise bien les sentiments du créateur par une stratégie élaborée et contrôlée par le caractère de la liaison, donne une plus grande maîtrise de l'articulation dans le phrasé et permet la prise directe des nuances de fluctuations dans les liens entre les sons soit tranquilles, soit plus serrés, soit très rapprochés.

Des variations du tempo des notes individuelles peuvent être indiquées par des signes accompagnant les notes en question.

Dans l'exemple de la figure 6 les signes ont la forme de surfaces rondes de grandeurs et/ou de couleurs différentes. Pour prescrire des nuances de durée ces notes reposent souvent sur les extrémités des liaisons où il y a une surface ronde par note. Ce jeu de surfaces rondes permet de donner une qualification très subtile de la pulsion rythmique, donne un effet complémentaire à l'interprétation et permet d'aller plus en profondeur dans le détail de l'interprétation.

L'invention propose un jeu de surfaces rondes avec des nuances de grandeur, de couleur et/ou éventuellement de forme différentes.
Le créateur utilise plusieurs, par exemple 3, sortes de cercles pour indiquer les notes qui agissent sur la fluctuation rythmique.
Les notes d'appui 11, qui marquent la pulsion rythmique, donnent l'élan dans les phrasés, sont des pilliers qui structurent le déroulement rythmique des phrasés et sont placées en général en début de phrasé, sur les temps, mais peuvent également être placées en contretemps;
Les notes articulées et retenues 12 sont presque toujours situées en fin de phrasé. Elles donnent l'impression de retenir le phrasé et un effet de légère conclusion. Elles sont jouées un peu plus tard en comparaison avec le rythme. La fluctuation de la note retenue provoque une respiration pour repartir.
Les notes en suspension 13, qui sont des notes attaquées plus sensiblement rythmiquement. Elles sont positionnées au milieu ou en fin de phrasé. Il y a une rupture du mouvement, une impression de séparation du phrasé. Donne un effet de suspension brève sur une note dans un mouvement rythmique léger. La grandeur de la surface accentue l'effet de suspension, et sa teinte claire l'effet du mouvement rythmique léger.

Les surfaces des fonds des notes 11-13 sont rondes ou d'autre forme, par exemple la forme d'un soleil 14.

L'invention propose aussi des mesures pour l'interprétation des points d'orgue.

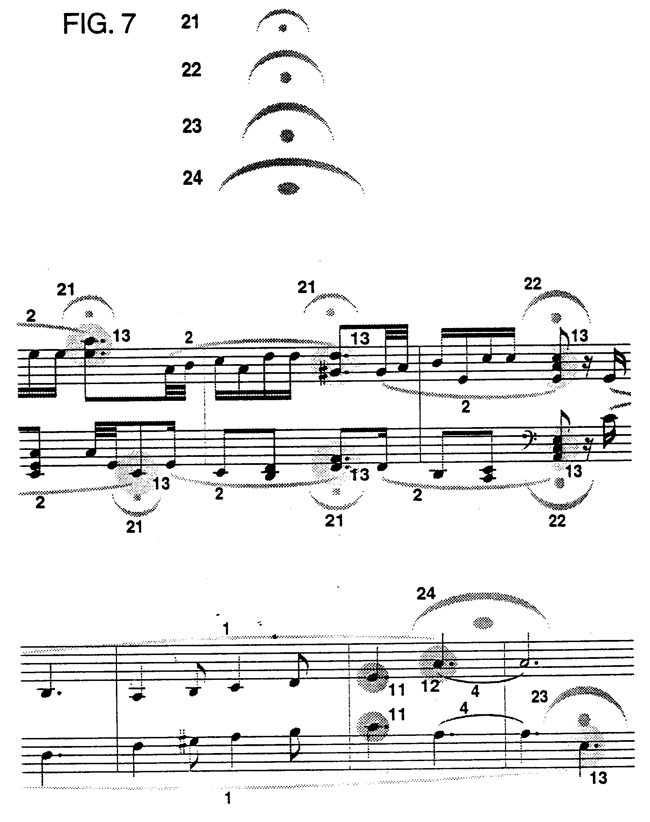

La figure 7 propose des fluctuations de points d'orgue, par la mise en évidence des rapports de grandeur et/ou de forme qui permettent de visualiser des différents arrêts ou repos du son. Ils marquent la fin du mouvement rythmique et peuvent être utilisés comme repos momentané ou prolongé.

La figure 7 montre quatre nuances de prolongement du son par des grandeurs et des formes différentes du point d'orgue:
21. arrêt bref
22. arrêt légèrement prolongé
23. arrêt prolongé et
24. arrêt prolongé sur un temps très long.

L'interprète perçoit en plus de l'arrêt du point d'orgue, son caractère et son impression de durée.

Ils apportent des nuances complémentaires aux phrasés d'interprétation.

Le choix de couleur, grandeur, intensité et forme des éléments de musique décrits au-dessus est de telle sorte que les éléments peuvent être utilisés ensembles, comme un système pour rendre la présentation de la musique bien lisible.

Le créateur d'une partition utilisant la présente invention est par exemple un compositeur, qui désire indiquer l'interprétation de ses propres oeuvres, ou une personne qui désire indiquer son interprétation des oeuvres d'autres compositeurs, par exemple un grand répertoire.

## Revendications

1. Matériel pour la présentation de la musique comprenant une partition d'au moins une portée avec des notes musicales, caractérisé en ce qu'au moins un fond indique une variation de tempo normal.

2. Matériel selon la revendication 1, caractérisé par au moins une succession des surfaces colorées différemment.

3. Matériel selon les revendications 1 ou 2, caractérisé par au moins une succession des surfaces avec intensités différentes.

4. Matériel selon la revendication 3, caractérisé par une succession d'au moins trois surfaces avec intensités progressives ou dégressives.

5. Matériel selon une des revendications précédentes, caractérisé par au moins deux fonds colorés différemment; l'un de ces fonds indiquant la progression du tempo (accéléré) et l'autre le dégression du tempo (ralenti).

6. Matériel selon une des revendications précédentes, caractérisé par au moins deux arcs de liaison avec différentes épaisseurs et/ou formés par des surfaces avec des intensités différentes et/ou avec des nuances de couleur.

7. Matériel selon une des revendications précédentes, caractérisé par au moins une note d'appui, une note articulée et retenue et/ou une note de suspension, cette note étant individuellement prévue d'un signe en forme d'un fond individualisé qui entoure cette note.

8. Matériel selon la revendication 7, caractérisé en ce qu'une note d'appui est pourvue d'un signe qui diffère en comparaison avec le signe d'une note en suspension ou d'une note articulée.

9. Matériel selon la revendication 8, caractérisé en ce qu'une note d'appui, une note en suspension et une note articulée sont individuellement pourvues des signes avec des surfaces ayant des intensités, des couleurs, des grandeurs et/ou des formes différentes.

10. Matériel selon une des revendications précédentes, caractérisé par au moins un point d'orgue pourvu d'un signe correspondant et de préférence de plusieurs points d'orgue différents, ces points d'orgue étant encore plus de préférence pourvus de signes qui se distinguent en
arrêt bref 21,
arrêt légèrement prolongé 22,
arrêt prolongé 23, et
arrêt prolongé sur un temps très long 24,
par une différence d'épaisseur, d'intensité, de couleur et/ou de forme.
